(19) **Europäisches Patentamt / European Patent Office / Office européen des brevets**

(11) **EP 2 203 791 B1**

(12) **EUROPÄISCHE PATENTSCHRIFT**

(45) Veröffentlichungstag und Bekanntmachung des Hinweises auf die Patenterteilung:
**13.06.2012 Patentblatt 2012/24**

(21) Anmeldenummer: **08803766.8**

(22) Anmeldetag: **05.09.2008**

(51) Int Cl.:
*F15B 9/09* (2006.01)    *G05B 13/04* (2006.01)
*G05B 11/42* (2006.01)

(86) Internationale Anmeldenummer:
**PCT/EP2008/061797**

(87) Internationale Veröffentlichungsnummer:
**WO 2009/053145 (30.04.2009 Gazette 2009/18)**

(54) **REGLERSTRUKTUR FÜR EINE HYDRAULIKZYLINDEREINHEIT MIT UNTERLAGERTEM ZUSTANDSREGLER**

REGULATION STRUCTURE FOR A HYDRAULIC CYLINDER UNIT WITH CASCADE STATUS REGULATOR

STRUCTURE DE RÉGULATEUR POUR UNITÉ DE VÉRIN HYDRAULIQUE AVEC RÉGULATEUR D'ÉTAT SOUS-JACENT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.10.2007 DE 102007050892**

(43) Veröffentlichungstag der Anmeldung:
**07.07.2010 Patentblatt 2010/27**

(73) Patentinhaber: **Siemens Aktiengesellschaft**
**80333 München (DE)**

(72) Erfinder:
• **TAUTZ, Wilfried**
  **91301 Forchheim (DE)**
• **WOHLD, Dietrich**
  **91462 Rauschenberg (DE)**

(56) Entgegenhaltungen:
**EP-A- 1 297 941    WO-A-94/22777**

**Beschreibung**

Die vorliegende Erfindung geht aus von einer Reglerstruktur zum Regeln einer Hydraulikzylindereinheit,

- wobei die Reglerstruktur einen äußeren Regler aufweist, dem als Sollwert eine Sollkraft oder eine Sollstellung eines Kolbens der Hydraulikzylindereinheit und eine korrespondierende Istgröße des Kolbens zugeführt werden,
- wobei der äußere Regler anhand des ihm zugeführten Sollwertes und des ihm zugeführten Istwertes eine Stellgröße für eine Ventilsteuereinheit der Hydraulikzylindereinheit ermittelt und die Stellgröße an die Ventilsteuereinheit ausgibt.

Derartige Regelstrukturen sind allgemein bekannt.

Bei der Regelung von Hydrauliksystemen, die aus Servoventil (= Ventilsteuereinheit), Hydraulikzylinder und Hydraulikkolben bestehen, werden möglichst kurze Anregelzeiten angestrebt, um beim Anfahren von neu vorgegebenen Sollwerten und beim Ausregeln von Störungen schnell reagieren zu können. Bei üblichen Positions- und Kraftreglern kann es jedoch vorkommen, dass abhängig vom Verhalten der Hydraulikzylindereinheit nur relativ große Anregelzeiten erreicht werden. Dieses Problem ist insbesondere bei Langhubzylindern von großer Bedeutung.

Im Stand der Technik wird versucht, die Anregelzeiten durch eine Kraftaufschaltung zu verringern. Die Kraftaufschaltung besteht darin, dass bei der Positionsregelung die Kraft über ein $DT_1$-Glied mitkoppelnd aufgeschaltet wird. Durch diese Vorgehensweise kann die wirksame Verstärkung des Positionsreglers erhöht werden. Die Anregelzeit wird somit kleiner. Nachteilig ist bei dieser Ausgestaltung jedoch, dass Dämpfung der Regelung sehr klein wird. Das System neigt daher zu Schwingungen.

Aus der DE 10 2006 028 094 A1 ist in Verbindung mit einer Spritzgießmaschine eine Regelstruktur zum Regeln einer Hydraulikzylindereinheit bekannt, welche einen inneren Regler und einen dem inneren Regler überlagerten äußeren Regler aufweist. Dem äußeren Regler kann als Sollwert eine Sollstellung des Kolbens der Hydraulikzylindereinheit und als Istwert die korrespondierende Istgröße des Kolbens zugeführt werden. Der äußere Regler ermittelt anhand des ihm zugeführten Sollwertes und des ihm zugeführten Istwertes einen "Sollzustand" der Hydraulikzylindereinheit. Der Sollzustand ist hierbei die Sollkraft. Der äußere Regler führt die von ihm ermittelte Sollkraft dem inneren Regler als dessen Sollwert zu. Dem inneren Regler wird weiterhin stets die Istkraft zugeführt. Zusätzlich kann dem inneren Regler ein Weg- oder Geschwindigkeitsistwert zugeführt werden.

Aus der WO 94/22777 A1 ist eine Reglerstruktur zum Regeln einer Pneumatikzylindereinheit bekannt, die einen inneren Regler und einen dem inneren Regler überlagerten äußeren Regler aufweist. Dem äußeren Regler werden als Sollwert die Sollstellung eines Kolbens und als Istwert die Iststellung des Kolbens zugeführt. Der äußere Regler ermittelt anhand der Differenz von Sollstellung und Iststellung des Kolbens einen Sollzustand der Pneumatikzylindereinheit und führt den ermittelten Sollzustand dem inneren Regler als dessen Sollwert zu. Die Reglerstruktur weist weiterhin eine Zustandsermittlungseinheit auf, der sowohl eine Iststellung des Kolbens als auch eine Istkraft des Kolbens zugeführt werden. Die Zustandsermittlungseinheit ermittelt einen Istzustand der Pneumatikzylindereinheit und führt den ermittelten Istzustand dem inneren Regler als dessen Istwert zu. Der innere Regler ermittelt anhand des ihm zugeführten Sollwertes und des ihm zugeführten Istwertes eine Stellgröße für eine Ventilsteuereinheit der Pnetimatikzylindereinheit und gibt die Stellgröße an die Ventilsteuereinheit aus. Der Istzustand ist durch die zeitliche Ableitung der Iststellung des Kolbens und durch die Istkraft des Kolbens bestimmt.

Die Aufgabe der vorliegenden Erfindung besteht darin, eine Reglerstruktur für eine Hydraulikzylindereinheit zu schaffen, die einerseits sehr dynamisch reagiert und dennoch stabil arbeitet.

Die Aufgabe wird durch eine Reglerstruktur für eine Hydraulikzylindereinheit mit den Merkmalen des Anspruchs 1 gelöst. Vorteilhafte Ausgestaltungen der Reglerstruktur sind Gegenstand der abhängigen Ansprüche 2 bis 7. Eine bevorzugte Verwendung der Reglerstruktur ist Gegenstand des Anspruchs 8. Die Ansprüche 9 bis 12 sind auf eine eigenständig erfinderische Teilausgestaltung der erfindungsgemäßen Reglerstruktur gerichtet.

Erfindungsgemäß weist die Reglerstruktur - zusätzlich zu den eingangs genannten Merkmalen - einen inneren Regler und einen dem inneren Regler überlagerten äußeren Regler auf. Dem äußeren Regler werden als Sollwert eine Sollkraft oder eine Sollstellung eines Kolbens der Hydraulikzylindereinheit und als Istwert eine korrespondierende Istgröße des Kolbens zugeführt. Der äußere Regler ermittelt anhand des ihm zugeführten Sollwertes und des ihm zugeführten Istwertes einen Sollzustand der Hydraulikzylindereinheit. Den Sollzustand führt der äußere Regler dem inneren Regler als dessen Sollwert zu. Die Reglerstruktur weist weiterhin eine Zustandsermittlungseinheit auf, der sowohl eine Iststellung des Kolbens als auch eine Istkraft des Kolbens zugeführt werden. Die Zustandsermittlungseinheit ermittelt einen Istzustand der Hydraulikzylindereinheit und führt den Istzustand dem inneren Regler als dessen Istwert zu. Der innere Regler ermittelt anhand des ihm zugeführten Sollwertes und des ihm zugeführten Istwertes eine Stellgröße für eine Ventilsteuereinheit der Hydraulikzylindereinheit und gibt die Stellgröße an die Ventilsteuereinheit aus. Die Zustandsermittlungseinheit ermittelt den Istzustand anhand der Beziehung

$$z = s + F/c, \qquad\qquad\qquad (1)$$

wobei z der Istzustand der Hydraulikzylindereinheit, s die Iststellung des Kolbens, F die Istkraft des Kolbens und c eine Federkonstante einer Hydraulikflüssigkeit der Hydraulikzylindereinheit sind.

Der Kerngedanke der vorliegenden Erfindung besteht also darin, die Hydraulikregelung als Kaskadenregelung aufzubauen. Aus der Stellung des Kolbens und der von ihm ausgeübten Kraft wird ein Zustand errechnet, der in einem inneren Regelkreis geregelt wird. Dem inneren Regelkreis ist der Stellungs- bzw. Kraftregler überlagert.

Auf Grund des erfindungsgemäßen Aufbaus ergeben sich insbesondere bei der Positionsregelung sehr gute Regelergebnisse. Zum Teil sind Anregelzeiten von wenigen Millisekunden (typisch unter 30 ms, in manchen Fällen sogar unter 20 ms) erreichbar. Auch bei der Kraftregelung ist die erfindungsgemäße Reglerstruktur von Vorteil. Trotz der verbesserten Reglerdynamik neigt die erfindungsgemäße Reglerstruktur jedoch nicht zu Schwingungen.

In einer bevorzugten Ausgestaltung der vorliegenden Erfindung ist der äußere Regler als PI-Regler ausgebildet. Dies steht im Gegensatz zur üblichen Ausgestaltung von Reglerstrukturen für Hydraulikzylindereinheiten, bei denen der Kraft- bzw. Stellungsregler als P-Regler ausgebildet ist.

In einer weiter bevorzugten Ausgestaltung weist der PI-Regler einen Proportionalblock und einen dem Proportionalblock nachgeordneten Integralerweiterungsblock auf. Der Proportionalblock gibt ein Proportionalsignal ab, das vom Integralerweiterungsblock um einen Integralanteil erweitert wird. Auf Grund dieser Ausgestaltung ist insbesondere auf einfache Weise eine Nachrüstung einer bereits bestehenden (ergänze: als P-Regler ausgebildeten) Reglerstruktur zum Regeln einer Hydraulikzylindereinheit möglich, so dass die nachgerüstete Reglerstruktur erfindungsgemäß ausgestaltet ist.

Es ist möglich, dass zwischen dem Proportionalblock und dem Integralerweiterungsblock ein erstes Schaltelement angeordnet ist und dem inneren Regler ein zweites Schaltelement nachgeordnet ist. In diesem Fall weist die Reglerstruktur eine Ansteuereinheit auf, von der die beiden Schaltelemente ansteuerbar sind. Durch entsprechendes Ansteuern der Schaltelemente können in diesem Fall der Integralerweiterungsblock und der innere Regler überbrückt werden. Durch diese Ausgestaltung ist es möglich, die Reglerstruktur alternativ auf erfindungsgemäße Weise (d. h. mit zwei kaskadierten Reglern, wobei der äußere Regler als PI-Regler ausgebildet ist) oder auf konventionelle Weise (d. h. als einzelnen Regler, der als P-Regler arbeitet) zu betreiben.

Wie bereits erwähnt, ist der äußere Regler bevorzugt als PI-Regler ausgebildet. Der innere Regler hingegen ist bevorzugt als P-Regler ausgebildet.

Es ist möglich, dem äußeren Regler eine Umschalteinrichtung vorzuordnen, der die Sollkraft, die Istkraft, die Sollstellung und die Iststellung des Kolbens zugeführt werden. In diesem Fall weist die Reglerstruktur eine Ansteuereinheit auf, von der die Umschalteinrichtung derart ansteuerbar ist, dass dem äußeren Regler alternativ die Sollkraft und die Istkraft oder die Sollstellung und die Iststellung des Kolbens zugeführt werden. Auf diese Weise ist es möglich, die Hydraulikzylindereinheit alternativ kraft- und stellungsgeregelt zu betreiben.

Es ist möglich, dass die Reglerstruktur in Hardware ausgestaltet ist. Bevorzugt ist sie jedoch als Software ausgebildet.

Die Hydraulikzylindereinheit kann prinzipiell für beliebige Verstellvorgänge eingesetzt werden. Bevorzugt ist jedoch, eine mittels einer erfindungsgemäßen Reglerstruktur geregelte Hydraulikzylindereinheit zur Anstellungsregelung eines Walzgerüsts zu verwenden.

Weitere Vorteile und Einzelheiten ergeben sich aus der nachfolgenden Beschreibung von Ausführungsbeispielen in Verbindung mit den Zeichnungen sowie den weiteren Ansprüchen. Es zeigen in Prinzipdarstellung:

FIG 1    ein Übersichtsschaltbild einer Hydraulikzylindereinheit und einer Reglerstruktur,
FIG 2    die Reglerstruktur von FIG 1 im Detail und
FIG 3    eine Ausgestaltung der Reglerstruktur von FIG 2.

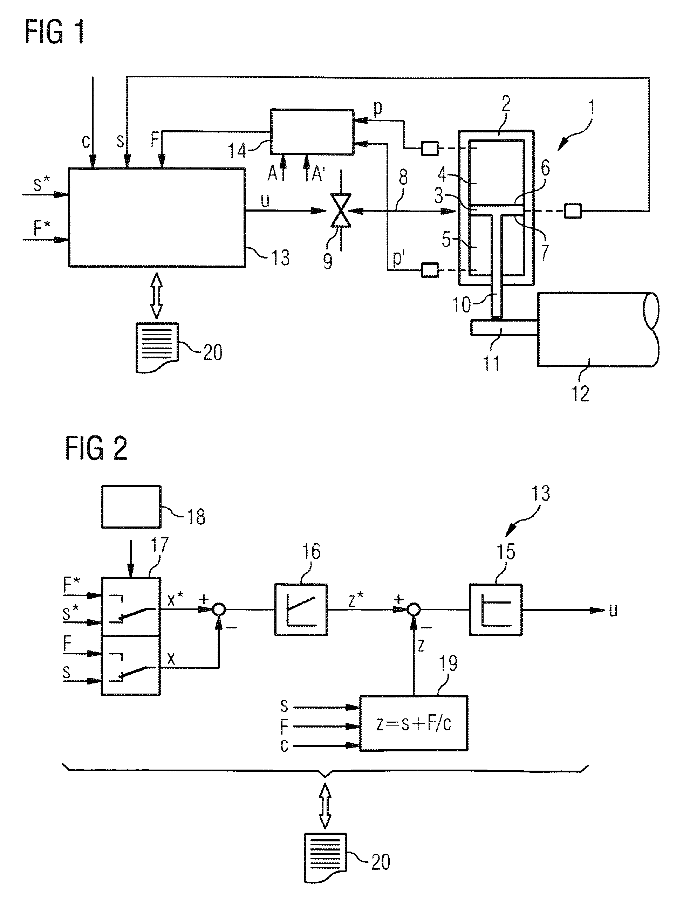

Gemäß FIG 1 weist eine Hydraulikzylindereinheit 1 einen Hydraulikzylinder 2 auf. Im Hydraulikzylinder 2 ist ein Kolben 3 verschiebbar gelagert. Der Kolben 3 trennt zwei Arbeitsräume 4, 5 voneinander. Er weist auf seiner Vorderseite 6 eine erste Arbeitsfläche A auf, auf seiner Rückseite 7 eine zweite Arbeitsfläche A'. In den Arbeitsräumen 4, 5 herrschen Arbeitsdrücke p, p'. Die Zufuhr und Abfuhr einer Hydraulikflüssigkeit 8 erfolgt über eine Ventilsteuereinheit 9.

Der obenstehend erläuterte Aufbau und die obenstehend kurz erläuterte Wirkungsweise der Hydraulikzylindereinheit 1 und der Ventilsteuereinheit 9 sind allgemein bekannt. Hierzu sind daher keine detaillierten Ausführungen erforderlich.

Die Hydraulikzylindereinheit 1 kann für beliebige Einsatzzwecke verwendet werden. Gemäß FIG 1 wirkt beispielsweise der Kolben 3 über einen Stempel 10 auf eine Lagerung 11 einer Walze 12 eines im Übrigen nicht dargestellten Walzgerüsts. Die Hydraulikzylindereinheit 1 wird im vorliegenden Fall daher zur Anstellungsregelung des Walzgerüsts eingesetzt.

Die Hydraulikzylindereinheit 1 wird gemäß FIG 1 mittels einer Reglerstruktur 13 geregelt, welche eine Stellgröße u an die Ventilsteuereinheit 9 ausgibt. Der Reglerstruktur 13 werden als Istwerte s, F eine Iststellung s des Kolbens 3 und eine vom Kolben 3 ausgeübte Istkraft F zugeführt. Die Istkraft F wird hierbei gemäß der Formel

$$F = pA - p'A' \qquad\qquad (2)$$

ermittelt. Die Ermittlung erfolgt gemäß FIG 1 in einer Kraftermittlungseinheit 14, die nicht Bestandteil der Reglerstruktur 13 ist. Die Kraftermittlungseinheit 14 könnte jedoch in die Reglerstruktur 13 integriert sein.

Der Reglerstruktur 13 wird weiterhin mindestens ein Sollwert s*, F* zugeführt. Hierbei kann es sich alternativ um eine Sollstellung s* des Kolbens 3 oder eine vom Kolben 3 auszuübende Sollkraft F* handeln. Es ist auch möglich, der Reglerstruktur 13 beide Sollwerte s*, F* zuzuführen. Dies wird später in Verbindung mit FIG 2 näher erläutert werden.

Schließlich wird der Reglerstruktur 13 als Parameter eine Federkonstante c der Hydraulikflüssigkeit 8 zugeführt. Die Federkonstante c kann hierbei eine absolute Konstante sein. Alternativ kann sie in Abhängigkeit von der Iststellung s des Kolbens 3, gegebenenfalls unter Einschluss der Arbeitsdrücke p, p' und der Arbeitsflächen A, A', ermittelt werden.

Die Ausgestaltung der Reglerstruktur 13 wird nachfolgend in Verbindung mit FIG 2 detailliert erläutert. Die Ausgestaltung der Reglerstruktur 13 ist der Kerngegenstand der vorliegenden Erfindung.

Gemäß FIG 2 weist die Reglerstruktur 13 einen inneren Regler 15 und einen äußeren Regler 16 auf. Der äußere Regler 16 ist hierbei dem inneren Regler 15 überlagert. Der innere Regler 15 ist vorzugsweise als P-Regler ausgebildet. Der äußere Regler 16 ist vorzugsweise als PI-Regler ausgebildet.

Dem äußeren Regler 16 wird als Sollwert x* alternativ die Sollkraft F* oder die Sollstellung s* zugeführt. Als Istwert x wird dem äußeren Regler 16 die korrespondierende Istgröße s, F des Kolbens 3 zugeführt.

Es ist möglich, dass dem äußeren Regler 16 eine Umschalteinrichtung 17 vorgeordnet ist. Der Umschalteinrichtung 17 werden in diesem Fall die Sollkraft F*, die Istkraft F, die Sollstellung s* und die Iststellung s des Kolbens 3 zugeführt. In diesem Fall weist die Reglerstruktur 13 eine Ansteuereinheit 18 auf, von der die Umschalteinrichtung 17 ansteuerbar ist. Je nach Ansteuerzustand der Umschalteinrichtung 17 werden in diesem Fall dem äußeren Regler 16 alternativ die Sollkraft F* und die Istkraft F oder die Sollstellung s* und die Iststellung s des Kolbens 3 zugeführt. Der äußere Regler 16 kann daher alternativ als Kraft- oder als Stellungsregler betrieben werden. Unabhängig davon, ob der äußere Regler 16 als Kraft- oder als Stellungsregler betrieben wird, ermittelt der äußere Regler 16 anhand des ihm zugeführten Sollwertes x* und des ihm zugeführten Istwertes x einen Sollzustand z* der Hydraulikzylindereinheit 1. Den von ihm ermittelten Sollzustand z* führt der äußere Regler 16 dem inneren Regler 15 als dessen Sollwert z* zu.

Die Reglerstruktur 13 weist weiterhin eine Zustandsermittlungseinheit 19 auf. Der Zustandsermittlungseinheit 19 werden sowohl die Iststellung s als auch die Istkraft F des Kolbens 3 zugeführt. Die Zustandsermittlungseinheit 19 ermittelt anhand der ihr zugeführten Werte s, F einen Istzustand z der Hydraulikzylindereinheit 1. Den von ihr ermittelten Istzustand z führt die Zustandsermittlungseinheit 19 dem inneren Regler 15 als dessen Istwert z zu. Die Zustandsermittlungseinheit 19 ermittelt den Istzustand z anhand der Beziehung

$$z = s + F/c \qquad\qquad (3)$$

Der Istzustand z entspricht daher vom Ansatz her einer Menge an Hydraulikflüssigkeit 8, die sich in der Hydraulikzylindereinheit 1 befindet.

Der innere Regler 15 ermittelt anhand des ihm zugeführten Sollwertes z* und des ihm zugeführten Istwertes z die Stellgröße u für die Ventilsteuereinheit 9 und gibt die Stellgröße u an die Ventilsteuereinheit 9 aus.

Es ist möglich, dass die Reglerstruktur 13 schaltungstechnisch realisiert ist. Vorzugsweise ist die Reglerstruktur 13 jedoch gemäß den FIG 1 und 2 als Softwaremodul 20 ausgebildet.

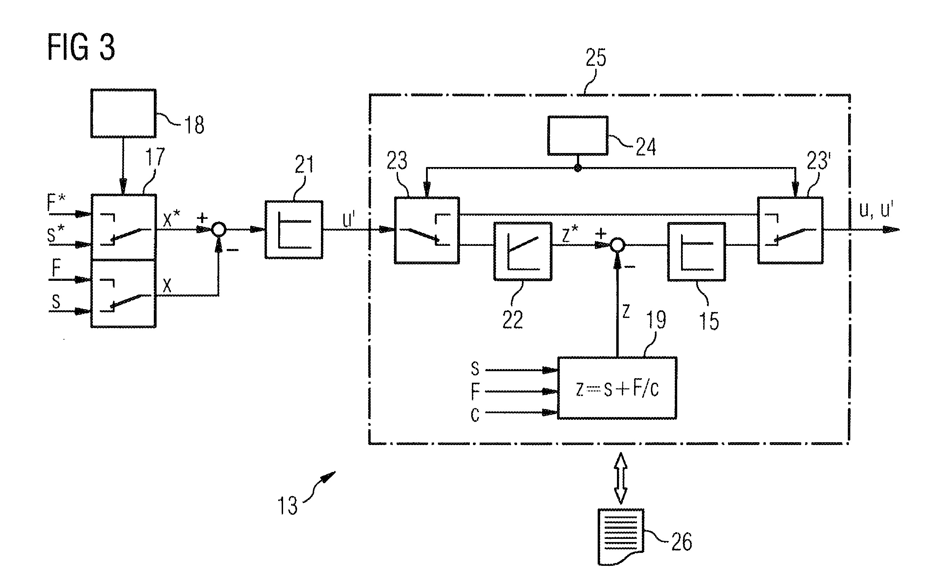

In Verbindung mit FIG 3 wird nachfolgend eine Modifikation der Reglerstruktur 13 von FIG 2 erläutert. Soweit möglich und sinnvoll, werden hierbei die gleichen Bezugszeichen wie bei FIG 2 verwendet. Ferner werden nachfolgend nur die Unterschiede hervorgehoben. Die übrigen Ausführungen zum Aufbau und zur Funktionsweise der Reglerstruktur 13 bleiben weiterhin gültig.

Gemäß FIG 3 weist der äußere Regler 16 einen Proportionalblock 21 und einen Integralerweiterungsblock 22 auf. Der Integralerweiterungsblock 22 ist hierbei dem Proportionalblock 21 nachgeordnet. Der Proportionalblock 21 gibt ein Proportionalsignal u' aus. Der Proportionalblock 21 entspricht daher vom Ansatz her einem P-Regler. Der Integralerweiterungsblock 22 erweitert das vom Proportionalblock 21 abgegebene Proportionalsignal u' um einen Integralanteil. Die Kombination des Proportionalblocks 21 und des Integralerweiterungsblocks 22 entspricht somit dem als PI-Regler 16 ausgebildeten äußeren Regler 16.

Gemäß FIG 3 ist zwischen dem Proportionalblock 21 und dem Integralerweiterungsblock 22 ein erstes Schaltelement 23 angeordnet. Weiterhin ist dem inneren Regler 15 ein zweites Schaltelement 23' nachgeordnet. Die Reglerstruktur 13 weist in diesem Fall weiterhin eine Ansteuereinheit 24 auf, von der die beiden Schaltelemente 23, 23' ansteuerbar sind. Je nach Ansteuerzustand der Schaltelemente 23, 23' sind daher alternativ der Integralerweiterungsblock 22 und der innere Regler 15 aktiv oder deaktiv. Je nach Ansteuerzustand der Schaltelemente 23, 23' kann daher die Reglerstruktur 13 entweder als konventioneller Kraft- bzw. Stellungsregler betrieben werden oder als erfindungsgemäßer kaskadierter Regler. Im erstgenannten Fall ist hierbei der konventionelle Regler als P-Regler ausgebildet, im letztgenannten Fall der äußere Regler 16 als PI-Regler, der innere Regler 15 als P-Regler.

Die Ansteuereinheit 24 ist in FIG 3 als von der Ansteuereinheit 18 unabhängige Einrichtung dargestellt. Diese Ausgestaltung ist selbstverständlich möglich. Alternativ können die Ansteuereinheiten 18, 24 zu einer gemeinsamen Einheit zusammengefasst sein.

Der Integralerweiterungsblock 22 und der innere Regler 15 sowie die Zustandsermittlungseinheit 19 bilden zusammen eine Innenstruktur 25 der Reglerstruktur 13. Die Innenstruktur 25 kann als eigenständige Einheit ausgebildet sein. Insbesondere kann sie gemäß FIG 3 - im Falle der Ausgestaltung der Reglerstruktur 13 als Softwaremodul 20 - als eigenes Softwaremodul 26 ausgebildet sein. Die Schaltelemente 23, 23' sowie die Ansteuereinheit 24 für die Schaltelemente 23, 23' können hierbei Bestandteile der Innenstruktur 25 sein. Sie können jedoch alternativ nicht vorhanden sein oder außerhalb der Innenstruktur 25 angeordnet sein.

Auf Grund der erfindungsgemäß ausgestalteten Reglerstruktur 13 lassen sich kleinere Anregelzeiten (zum Teil unter 20 ms, beispielsweise 15 ms) als mit konventionell ausgestalteten Reglerstrukturen erzielen. Dies gilt sogar dann, wenn der konventionelle Regler als Positionsregler mit Kraftaufschaltung betrieben wird. Dennoch ist bei der erfindungsgemäßen Reglerstruktur 13 die Dämpfung größer, das heißt die Schwingungsneigung geringer.

In der Ausgestaltung gemäß FIG 3 kann die Innenstruktur 25 als eigenständiger Block realisiert werden. Durch diese Ausgestaltung ist zum einen eine einfache Nachrüstbarkeit bestehender, konventioneller Reglerstrukturen möglich. Zum anderen ist es durch diese Ausgestaltung möglich, die Innenstruktur 25 alternativ zuzuschalten oder zu überbrücken. Eine weitergehende Anpassung überlagerter Reglerstrukturen ist hierbei nicht erforderlich.

**Patentansprüche**

**1.** Reglerstruktur zum Regeln einer Hydraulikzylindereinheit (1),

- wobei die Reglerstruktur einen inneren Regler (15) und einen dem inneren Regler (15) überlagerten äußeren Regler (16) aufweist,
- wobei dem äußeren Regler (16) als Sollwert (x*) eine Sollkraft (F*) oder eine Sollstellung (s*) eines Kolbens (3) der Hydraulikzylindereinheit (1) und als Istwert (x) eine korrespondierende Istgröße (F, s) des Kolbens (3) zugeführt werden,
- wobei der äußere Regler (16) anhand des ihm zugeführten Sollwertes (x*) und des ihm zugeführten Istwertes (x) einen Sollzustand (z*) der Hydraulikzylindereinheit (1) ermittelt,
- wobei der äußere Regler (16) den von ihm ermittelten Sollzustand (z*) dem inneren Regler (15) als dessen Sollwert (z*) zuführt,
- wobei die Reglerstruktur eine Zustandsermittlungseinheit (19) aufweist, der sowohl eine Iststellung (s) des Kolbens (3) als auch eine Istkraft (F) des Kolbens (3) zugeführt werden,
- wobei die Zustandsermittlungseinheit (19) einen Istzustand (z) der Hydraulikzylindereinheit (1) ermittelt und dem inneren Regler (15) als dessen Istwert (z) zuführt,
- wobei der innere Regler (15) anhand des ihm zugeführten Sollwertes (z*) und des ihm zugeführten Istwertes (z) eine Stellgröße (u) für eine Ventilsteuereinheit (9) der Hydraulikzylindereinheit (1) ermittelt und an die Ventilsteuereinheit (9) ausgibt,
- **dadurch gekennzeichnet dass** die Zustandsermittlungseinheit (19) den Istzustand (z) anhand der Beziehung

$$z = s + F/c$$

ermittelt, wobei z der Istzustand der Hydraulikzylindereinheit (1), s die Iststellung des Kolbens (3), F die Istkraft des Kolbens (3) und c eine Federkonstante einer Hydraulikflüssigkeit (8) der Hydraulikzylindereinheit (1) sind.

2. Reglerstruktur nach Anspruch 1,
**dadurch gekennzeichnet,**
**dass** der äußere Regler (16) als PI-Regler ausgebildet ist.

3. Reglerstruktur nach Anspruch 2,
**dadurch gekennzeichnet,**
**dass** der PI-Regler (16) einen Proportionalblock (21) und einen dem Proportionalblock (21) nachgeordneten Integralerweiterungsblock (22) aufweist, der ein vom Proportionalblock (21) abgegebenes Proportionalsignal (u') um einen Integralanteil erweitert.

4. Reglerstruktur nach Anspruch 3,
**dadurch gekennzeichnet,**
**dass** zwischen dem Proportionalblock (21) und dem Integralerweiterungsblock (22) ein erstes Schaltelement (23) angeordnet ist, dass dem inneren Regler (15) ein zweites Schaltelement (23') nachgeordnet ist und dass die Reglerstruktur eine Ansteuereinheit (24) aufweist, von der die beiden Schaltelemente (23, 23') ansteuerbar sind, so dass durch entsprechendes Ansteuern der Schaltelemente (23, 23') der Integralerweiterungsblock (22) und der innere Regler (15) überbrückbar sind.

5. Reglerstruktur nach einem der obigen Ansprüche,
**dadurch gekennzeichnet,**
**dass** der innere Regler (15) als P-Regler ausgebildet ist.

6. Reglerstruktur nach einem der obigen Ansprüche,
**dadurch gekennzeichnet,**
**dass** dem äußeren Regler (16) eine Umschalteinrichtung (17) vorgeordnet ist, der die Sollkraft (F*), die Istkraft (F), die Sollstellung (s*) und die Iststellung (s) des Kolbens (3) zugeführt werden, und dass die Reglerstruktur eine Ansteuereinheit (18) aufweist, von der die Umschalteinrichtung (17) derart ansteuerbar ist, dass dem äußeren Regler (16) alternativ die Sollkraft (F*) und die Istkraft (F) oder die Sollstellung (s*) und die Iststellung (s) des Kolbens (3) zugeführt werden.

7. Reglerstruktur nach einem der obigen Ansprüche,
**dadurch gekennzeichnet,**
**dass** sie als Softwaremodul (20) ausgebildet ist.

8. Verwendung einer mittels einer Reglerstruktur (13) nach einem der obigen Ansprüche geregelten Hydraulikzylindereinheit (1) zur Anstellungsregelung eines Walzgerüsts.

9. Innenstruktur für eine Reglerstruktur (13) zum Regeln einer Hydraulikzylindereinheit (1),

- wobei die Innenstruktur einen Integralerweiterungsblock (22) aufweist, der ein dem Integralerweiterungsblock (22) zugeführtes Proportionalsignal (u') um einen Integralanteil erweitert,
- wobei das um den Integralanteil erweiterte Proportionalsignal einem Sollzustand (z*) entspricht, der einem inneren Regler (15) der Innenstruktur als dessen Sollwert (z*) zugeführt wird,
- die Innenstruktur eine Zustandsermittlungseinheit (19) aufweist, der sowohl eine Iststellung (s) eines Kolbens (3) der Hydraulikzylindereinheit (1) als auch eine Istkraft (F) des Kolbens (3) zugeführt werden und die einen Istzustand (z) der Hydraulikzylindereinheit (1) ermittelt und dem inneren Regler (15) als dessen Istwert (z) zuführt,
- wobei der innere Regler (15) anhand des ihm zugeführten Sollwertes (z*) und des ihm zugeführten Istwertes (z) eine Stellgröße (u) für eine Ventilsteuereinheit (9) der Hydraulikzylindereinheit (1) ermittelt und an die Ventilsteuereinheit (9) ausgibt,
- wobei die Zustandsermittlungseinheit (19) den Istzustand (z) anhand der Beziehung

$$z \;=\; s \;+\; F/c$$

ermittelt, wobei z der Istzustand der Hydraulikzylindereinheit (1), s die Iststellung des Kolbens (3), F die Istkraft des Kolbens (3) und c eine Federkonstante einer Hydraulikflüssigkeit (8) der Hydraulikzylindereinheit (1) sind,
- wobei die Innenstruktur als eigenständige Einheit ausgebildet ist, die zwischen einem Ausgang eines als Kraft- oder Positionsreglers ausgebildeten P-Reglers (21) für die Hydraulikzylindereinheit (1) und der Ventilsteuereinheit (9) der Hydraulikzylindereinheit (1) in eine von dem P-Regler (21) und der Ventilsteuereinheit gebildete Reglerstruktur einschleifbar ist, ohne die zuvor bestehende Reglerstruktur über das Einschleifen der Innenstruktur hinaus weitergehend anpassen zu müssen.

10. Innenstruktur nach Anspruch 9,
**dadurch gekennzeichnet,**
**dass** dem Integralerweiterungsblock (22) ein erstes Schaltelement (23) vorgeordnet ist, dass dem inneren Regler (15) ein zweites Schaltelement (23') nachgeordnet ist und dass die Innenstruktur eine Ansteuereinheit (24) aufweist, von der die beiden Schaltelemente (23, 23') ansteuerbar sind, so dass durch entsprechendes Ansteuern der Schaltelemente (23, 23') der Integralerweiterungsblock (22) und der innere Regler (15) überbrückbar sind.

11. Innenstruktur nach Anspruch 9 oder 10,
**dadurch gekennzeichnet,**
**dass** der innere Regler (15) als P-Regler ausgebildet ist.

12. Innenstruktur nach Anspruch 9, 10 oder 11,
**dadurch gekennzeichnet,**
**dass** sie als Softwaremodul (26) ausgebildet ist.

**Claims**

1. Controller structure for controlling a hydraulic cylinder unit (1),

   - wherein the controller structure has an internal controller (15) and an external controller (16) superimposed on the internal controller (15),
   - wherein a setpoint force (F*) or a setpoint position (s*) of a piston (3) of the hydraulic cylinder unit (1) is fed as a setpoint value (x*) to the external controller (16), and a corresponding actual variable (F, s) of the piston (3) is fed as an actual value (x) to the external controller (16),
   - wherein the external controller (16) determines, on the basis of the setpoint value (x*) fed thereto and the actual value (x) fed thereto, a setpoint state (z*) of the hydraulic cylinder unit (1),
   - wherein the external controller (16) feeds the setpoint state (z*), determined thereby, to the internal controller (15) as the setpoint value (z*) of said internal controller (15),
   - wherein the controller structure has a state-determining unit (19), to which both an actual position (s) of the piston (3) and an actual force (F) of the piston (3) are fed,
   - wherein the state-determining unit (19) determines an actual state (z) of the hydraulic cylinder unit (1) and feeds said actual state (z) to the internal controller (15) as the actual value (z) thereof,
   - wherein the internal controller (15) determines, on the basis of the setpoint value (z*) fed thereto and the actual value (z) fed thereto, a manipulated variable (u) for a valve control unit (9) of the hydraulic cylinder unit (1) and outputs said manipulated variable (u) to the valve control unit (9), **characterized**

   **in that** the state-determining unit (19) determines the actual state (z) on the basis of the relationship

$$z = s + F/c$$

   where z is the actual state of the hydraulic cylinder unit (1), s is the actual position of the piston (3), F is the actual force of the piston (3) and c is a spring constant of a hydraulic fluid (8) of the hydraulic cylinder unit (1).

2. Controller structure according to Claim 1,
   **characterized**
   **in that** the external controller (16) is embodied as a PI controller.

3. Controller structure according to Claim 2,
   **characterized**
   **in that** the PI controller (16) has a proportional block (21) and an integral extension block (22), which is arranged downstream of the proportional block (21) and extends a proportional signal (u'), output by the proportional block (21), by an integral portion.

4. Controller structure according to Claim 3,
   **characterized**
   **in that** a first switching element (23) is arranged between the proportional block (21) and the integral extension block (22), in that a second switching element (23') is arranged downstream of the internal controller (15), and in that the controller structure has an actuation unit (24), by which the two switching elements (23, 23') can be actuated, so that the integral extension block (22) and the internal controller (15) can be bypassed by corresponding actuation of the switching elements (23, 23').

5. Controller structure according to one of the above claims,
   **characterized**
   **in that** the internal controller (15) is embodied as a P controller.

6. Controller structure according to one of the above claims,
   **characterized**
   **in that** a switching device (17), to which the setpoint force (F*), the actual force (F), the setpoint position (s*) and the actual position (s) of the piston (3) are fed, is arranged upstream of the external controller (16), and in that the controller structure has an actuation unit (18), by which the switching device (17) can be actuated in such a way that the setpoint force (F*) and the actual force (F) or the setpoint position (s*) and the actual position (s) of the piston (3) are alternatively fed to the external controller (16).

7. Controller structure according to one of the above claims,
   **characterized**
   **in that** said controller structure is embodied as a software module (20).

8. Use of a hydraulic cylinder unit (1), controlled by means of a controller structure (13) according to one of the above claims, for controlling the positioning of a rolling stand.

9. Internal structure for a controller structure (13) for controlling a hydraulic cylinder unit (1),

   - wherein the internal structure has an integral extension block (22) which extends a proportional signal (u'), fed to the integral extension block (22), by an integral portion,
   - wherein the proportional signal which is extended by the integral portion corresponds to a setpoint state (z*) which is fed to an internal controller (15) of the internal structure as the setpoint value (z*) of said internal controller (15),
   - the internal structure has a state-determining unit (19) to which both an actual position (s) of a piston (3) of the hydraulic cylinder unit (1) and an actual force (F) of the piston (3) are fed, and which determines an actual state (z) of the hydraulic cylinder unit (1) and feeds said actual state (z) to the internal controller (15) as the actual value (z) thereof,
   - wherein the internal controller (15) determines, on the basis of the setpoint value (z*) fed thereto and the actual value (z) fed thereto, a manipulated variable (u) for a valve control unit (9) of the hydraulic cylinder unit (1) and outputs said manipulated variable (u) to the valve control unit (9),
   - wherein the state-determining unit (19) determines the actual state (z) on the basis of the relationship

   $$z = s + F/c,$$

   where z is the actual state of the hydraulic cylinder unit (1), s is the actual position of the piston (3), F is the actual force of the piston (3) and c is a spring constant of a hydraulic fluid (8) of the hydraulic cylinder unit (1),
   - wherein the internal structure is embodied as an independent unit which can be connected between an output of a P controller (21), embodied as a force controller or position controller, for the hydraulic cylinder unit (1) and the valve control unit (9) of the hydraulic cylinder unit (1) into a controller structure which is formed by the P controller (21) and the valve control unit, without having to largely adapt the previously existing controller structure beyond the connection of the internal structure.

10. Internal structure according to Claim 9,
**characterized**
**in that** a first switching element (23) is arranged upstream of the integral extension block (22), in that a second switching element (23') is arranged downstream of the internal controller (15), and in that the internal structure has an actuation unit (24), by which the two switching elements (23, 23') can be actuated, so that the integral extension block (22) and the internal controller (15) can be bypassed by correspondingly actuating the switching elements (23, 23').

11. Internal structure according to Claim 9 or 10,
**characterized**
**in that** the internal controller (15) is embodied as a P controller.

12. Internal structure according to Claim 9, 10 or 11,
**characterized**
**in that** said internal structure is embodied as a software module (26).

**Revendications**

1. Structure de régulateur pour la régulation d'un groupe ( 1 ) de vérin hydraulique,

- dans laquelle la structure de régulateur comporte un régulateur ( 15 ) intérieur et un régulateur ( 16 ) extérieur superposé au régulateur ( 15 ) intérieur,
- dans laquelle il est envoyé au régulateur ( 16 ) extérieur comme valeur ( x* ) de consigne une force ( F* ) de consigne ou une position ( s* ) de consigne d'un piston ( 3 ) du groupe de vérin hydraulique et comme valeur ( x ) réelle une grandeur ( F, s ) correspondante du piston ( 3 ),
- dans laquelle le régulateur ( 16 ) extérieur détermine, à l'aide de la valeur ( x* ) de consigne qui lui est envoyée et de la valeur ( x ) réelle qui lui est envoyée, un état ( z* ) de consigne du groupe ( 1 ) de vérin hydraulique,
- dans laquelle le régulateur ( 16 ) extérieur envoie au régulateur ( 15 ) intérieur comme sa valeur ( z* ) de consigne l'état ( z* ) de consigne qu'il a déterminé,
- dans laquelle la structure de régulateur comporte une unité ( 19 ) de détermination d'état à laquelle sont envoyés à la fois une position ( s ) réelle du piston ( 3 ) et une force ( F ) réelle du piston ( 3 ),
- dans laquelle l'unité ( 19 ) de détermination d'état détermine un état ( z ) réel du groupe ( 1 ) de vérin hydraulique et l'envoie au régulateur ( 15 ) intérieur comme sa valeur ( z ) réelle,
- dans laquelle le régulateur ( 15 ) intérieur détermine, à l'aide de la valeur ( z* ) de consigne qui lui est envoyée et de la valeur ( z ) réelle qui lui est envoyée, une grandeur ( u ) de réglage d'une unité ( 9 ) de commande de vanne du groupe ( 1 ) de vérin hydraulique et l'envoie à l'unité ( 9 ) de commande de vanne,
- **caractérisée en ce que** l'unité ( 19 ) de détermination d'état détermine l'état ( z ) réel au moyen de la relation

$$z = s + F/c$$

dans laquelle z est l'état réel du groupe ( 1 ) de vérin hydraulique, s est la position réelle du piston ( 3 ), F est la force réelle du piston ( 3 ) et c est une constante élastique d'un liquide ( 8 ) hydraulique du groupe ( 1 ) de vérin hydraulique.

2. Structure de régulateur suivant la revendication 1, **caractérisée en ce que** le régulateur ( 16 ) extérieur est constitué en régulateur PI.

3. Structure de régulateur suivant la revendication 2, dans laquelle le régulateur ( 16 ) PI comporte un bloc proportionnel et un bloc ( 22 ) d'extension intégral en aval du bloc ( 21 ) proportionnel, qui étend d'une partie intégrale un signal ( u' ) proportionnel émis par le bloc ( 21 ) proportionnel.

**4.** Structure de régulateur suivant la revendication 3, **caractérisée en ce qu'**entre le bloc ( 21 ) proportionnel et le bloc ( 22 ) d'extension intégral est monté un élément ( 23 ) de circuit, **en ce qu'**en aval du régulateur ( 15 ) intérieur est monté un deuxième élément ( 23' ) de circuit et **en ce que** la structure de régulateur comporte une unité ( 24 ) de commande par laquelle les deux éléments ( 23, 23' ) de circuit peuvent être commandés de sorte que par une commande adéquate des éléments ( 23, 23' ) de circuit le bloc ( 22 ) d'extension intégral et le régulateur ( 15 ) intérieur peuvent être court-circuités.

**5.** Structure de régulateur suivant l'une des revendications précédentes, **caractérisée en ce que** le régulateur ( 15 ) intérieur est constitué en régulateur P.

**6.** Structure de régulateur suivant l'une des revendications précédentes, **caractérisée en ce qu'**il est monté en amont du régulateur ( 16 ) extérieur un dispositif ( 17 ) de commutation auquel la force ( F* ) de consigne, la force ( F ) réelle, la position ( s* ) de consigne et la position ( s ) réelle du piston ( 3 ) sont envoyées et **en ce que** la structure de régulateur comporte une unité ( 18 ) de commande dans laquelle le dispositif ( 17 ) de commutation peut être commandé de manière à ce que soit envoyé au régulateur ( 16 ) extérieur, en alternance, la force ( F* ) de consigne et la force ( F ) réelle ou la position ( s* ) de consigne et la position ( s ) réelle du piston ( 3 ).

**7.** Structure de régulateur suivant l'une des revendications précédentes, **caractérisée en ce qu'**elle est constituée en module ( 20 ) logiciel.

**8.** Utilisation d'un groupe ( 1 ) de vérin hydraulique réglé au moyen d'une structure ( 13 ) de structure suivant l'une des revendications précédentes pour la régulation du serrage d'une cage de laminoir.

**9.** Structure intérieure pour une structure ( 13 ) de régulateur pour la régulation d'un groupe ( 1 ) de vérin hydraulique,

- dans laquelle la structure intérieure comporte un bloc ( 22 ) d'extension intégral, qui étend d'une partie intégrale un signal ( u' ) proportionnel envoyé au bloc ( 22 ) d'extension intégral,
- dans laquelle le signal proportionnel étendu de la partie intégrale correspond à un état ( z* ) de consigne qui est envoyé à un régulateur ( 15 ) de la structure intérieure comme sa valeur ( z* ) de consigne,
- la structure intérieure comporte une unité ( 19 ) de détermination d'état à laquelle sont envoyées à la fois une position ( s ) réelle d'un piston ( 3 ) du groupe ( 1 ) de vérin hydraulique et une force ( F ) réelle du piston ( 3 ) et qui détermine un état ( z ) réel du groupe ( 1 ) de vérin hydraulique et l'envoie au régulateur ( 15 ) intérieur comme sa valeur ( z ) réelle,
- dans laquelle le régulateur ( 15 ) intérieur détermine, à l'aide de la valeur ( z* ) de consigne qui lui est envoyée et de la valeur ( z ) réelle qui lui est envoyée, une grandeur ( u ) de réglage d'une unité ( 9 ) de commande de vanne du groupe ( 1 ) de vérin hydraulique et l'envoie à l'unité ( 9 ) de commande de vanne,
- dans lequel l'unité ( 19 ) de détermination d'état détermine l'état ( z ) réel au moyen de la relation

$$z = s + F/c$$

dans laquelle z est l'état réel du groupe ( 1 ) de vérin hydraulique, s est l'état réel du piston ( 3 ), F est la force réelle du piston ( 3 ) et c est une constante élastique d'un liquide ( 8 ) hydraulique du groupe ( 1 ) de vérin hydraulique,
- dans laquelle le structure intérieure est constituée en unité autonome qui peut être mise en boucle, entre une sortie d'un régulateur ( 21 ) P constitué en régulateur de force ou en régulateur de position pour le groupe ( 1 ) de vérin hydraulique et l'unité ( 9 ) de commande de vanne du groupe ( 1 ) de vérin hydraulique, dans une structure de régulateur formée par le régulateur P ( 21 ) et par l'unité de commande de vanne sans avoir à adapter dans une grande mesure la structure de régulateur existante auparavant au-delà de la mise en boucle de la structure intérieure.

**10.** Structure intérieure suivant la revendication 9, **caractérisée en ce qu'**un premier élément ( 23 ) de circuit est monté en amont du bloc ( 22 ) d'extension intégral, **en ce qu'**un deuxième élément ( 23' ) de circuit est monté en aval du régulateur ( 15 ) intérieur et **en ce que** la structure intérieure comporte une unité ( 24 ) de commande par laquelle les deux éléments ( 23, 23' ) de circuit peuvent être commandés de manière à pouvoir court-circuiter le bloc ( 22 ) d'extension intégral et le régulateur ( 15 ) intérieur par une commande adéquate des éléments ( 23, 23' ) de circuit.

11. Structure intérieure suivant la revendication 9 ou 10, **caractérisée en ce que** le régulateur ( 15 ) intérieur est constitué en régulateur P.

12. Structure intérieure suivant la revendication 9, 10 ou 11, **caractérisée en ce qu'**elle est constituée en module ( 26 ) logiciel.

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006028094 A1

- WO 9422777 A1